# EUROPEAN PATENT SPECIFICATION

(11) **EP 2 490 379 B1**
(45) Date of publication and mention of the grant of the patent: **30.08.2017**
(21) Application number: 11305171.8
(22) Date of filing: 18.02.2011
(51) Int. Cl.: H04L 12/70

(54) **AN IMPROVED TOKEN BUCKET CONTROLLER**
VERBESSERTER TOKEN-BUCKET-CONTROLLER
CONTRÔLEUR AMÉLIORÉ DE PANIERS DE JETONS

(43) Date of publication of application: 22.08.2012
(73) Proprietor: ALCATEL LUCENT, 92100 Boulogne-Billancourt (FR)
(72) Inventor: Van Hoof, Werner Jan Eliza, 2630, Aartselaar (BE)
(74) Representative: ALU Antw Patent Attorneys

(56) References cited:
- Anonymous: "Computer numbering formats", Wikipedia, the free encyclopedia , 16 February 2011 (2011-02-16), XP002638668, Retrieved from the Internet: URL:http://en.wikipedia.org/w/index.php?ti tle=Computer_numbering_formats&oldid=41419 4902 [retrieved on 2011-05-25]
- Anonymous: "Double precision floating-point format", Wikipedia, the free encyclopedia , 1 February 2011 (2011-02-01), XP002638669, Retrieved from the Internet: URL:http://en.wikipedia.org/w/index.php?ti tle=Double_precision_floating-point_format &oldid=411389567 [retrieved on 2011-05-25]
- Anonymous: "Dither", Wikipedia, the free encyclopedia , 8 February 2011 (2011-02-08), XP002638670, Retrieved from the Internet: URL:http://en.wikipedia.org/w/index.php?ti tle=Dither&oldid=412778457 [retrieved on 2011-05-25]

## Description

### Field of the Invention

The present invention generally relates to token bucket based data packet shaping or scheduling, i.e. a common way to control the rate of data packets that is injected into telecommunication networks. The current invention in particular relates to an improved token bucket controller with reduced memory requirements and/or extended bucket range.

### Background of the Invention

Token bucket based data packet traffic shapers rely on a bucket that receives tokens or credits at a constant pace, i.e. the bucket value is incremented with a fixed amount of tokens or credits per time unit. Per data packet sent, an amount of tokens or credits equal or proportionate to the length of the sent data packet is deducted from the bucket. A typical implementation of a token bucket controller hence consists of a token bucket parameter, i.e. M bits that represent the bucket value or bucket fill level, a bucket increment algorithm and a bucket decrement algorithm.

Existing token buckets tend to be large in size. Moreover, the size of token buckets is usually not optimized for the RAM devices wherein they are memorized. As a result, existing token buckets consume excessive memory resources in expensive devices such as FPGAs. Traffic shapers or schedulers that typically have to implement a few ten thousands of token buckets, e.g. up to 32.000 token buckets in an optical fibre access node, may even run out of memory when all token buckets have to be implemented simultaneously. A straightforward solution is found in reducing the number of bits used for the bucket parameter, M. However, reducing the number of bits implies a reduction of the bucket range or maximum bucket fill level.

The article "Computer Numbering Formats" as published in the Internet free encyclopedia Wikipedia on 16 February 2011 is a general publication on numbering formats. The article "Double Precision Floating-Point Format" as published in the Internet free encyclopedia Wikipedia on 1 February 2011 is a general publication on floating point formats. These two prior art documents demonstrate that compression through a multiplication factor and/or exponential notation is generally known.

It is an objective of the present invention to disclose a token bucket controller that resolves the above identified shortcomings of existing token buckets. More particularly, it is an objective of the present invention to disclose a token bucket controller with reduced memory requirements for a given bucket range, with increased bucket range for a given memory occupancy, or with reduced memory requirements and increased bucket range. It is a further objective of the present invention to optimize RAM usage of expensive devices for token bucket implementations.

### Summary of the Invention

According to the present invention, the above mentioned objectives are realized by a token bucket controller for data packet shaping or scheduling as defined by claim 1, the token bucket controller having a bucket parameter of M bits, M being a first integer value, and the bucket parameter comprising:
- a bucket value of N bits out of the M bits, N being a second integer value smaller than M, and
- a compression parameter of M-N bits out of the M bits, each compression parameter value corresponding with a respective multiplier value for the bucket value to thereby extend the bucket value range to 2^{N} multiplied with the respective multiplier value, with respective absolute granularity equal to the respective multiplier value,
wherein M is further configured to fit the width of an embedded SRAM in an FPGA device wherein the bucket parameter is memorized,
the token bucket controller further comprising:
- means for receiving the exact packet length of a sent data packet;
- means for dividing the exact packet length with the multiplier value thereby generating a quotient and a rest packet length; and
- means for determining a bucket value decrement or increment depending on the quotient and the rest packet length.

Indeed, by introducing a compression parameter, e.g. a multiplication factor, the range of the N bits bucket value is extended for a given memory occupancy of M bits. On the other hand, a given range or maximum bucket size will be achieved with reduced memory occupancy (i.e. a smaller value of M) when part of the M bits are used as a compression parameter or multiplication factor. Obviously, the two advantages may be combined as a result of which the bucket range may be extended while the memory occupancy M is reduced. The downside of the current invention is reduced accuracy: the minimum increment/decrement of the bucket will be determined by the multiplication factor. This is however not a real disadvantage for data packet shapers and schedulers whose requirements are typically expressed in relative accuracy, e.g. 1 % accuracy for the bucket value of shapers, 6 % accuracy for the bucket value of Deficit Round Robin (DRR) schedulers, etc.

It is acknowledged that compression through a multiplication factor and/or exponential notation is known from general publications on numbering formats like for instance the article "Computer Numbering Formats" retrieved from the Internet free encyclopedia Wikipedia, or publications on floating point formats like for instance the article "Double Precision Floating-Point Format" retrieved from the Internet free encyclopedia Wikipedia. The prior art however fails to teach how to apply such compression technique in a very specific manner to token bucket parameters where accuracy and range requirements as well as hardware constraints have to be respected.

Indeed, FPGAs are rather expensive devices containing limited SRAM memory resources. The embedded RAMs in an FPGA device are available in typical widths of 8 bits, 16 bits, 32 bits. By configuring the bucket parameter length M to fit the width of such an FPGA-SRAM, the gain in memory requirements for implementing token buckets is further increased. If the bucket range requires for instance an 18 bit bucket parameter, i.e. the maximum bucket fill level is 2¹⁸= 262144, two 16 bit FPGA-SRAMs are needed for state of the art implementations wherein 44 % of the RAM resources remain unused. Thanks to the current invention, the bucket parameter can be restricted in length to M=16 bits applying a multiplication factor 4 in the extension mode without impacting the bucket range. This way, a token bucket with same bucket range can be implemented using a single 16 bit FPGA-SRAMs instead of two. The overall gain in memory resources when reducing the bucket parameter length M from 18 to 16 to fit the width of available FPGA-SRAMs hence is 50 % in the above example.

Optionally, as defined by claim 2, the compression parameter comprises a sign value of 1 bit and a multiplier value of M-N-1 bits.

The sign bit enables to introduce a positive extension mode and negative extension mode for the bucket. In the positive extension mode, the number of tokens in the bucket is positive and obtained by multiplying the bucket value with a multiplication factor determined by the multiplier value. If the multiplier value occupies only 1 bit, i.e. M-N-1=1, a zero-bit may for instance correspond with a multiplication factor equal to 1, i.e. no expansion, and a one-bit may for instance correspond with a multiplication factor equal to 8. If the multiplier value occupies 2 bits, i.e. M-N-1 =2, a multiplier value of "00" may correspond with a multiplication factor equal to 1, a multiplier value of "01" may correspond with a multiplication factor equal to 8, a multiplier value of "10" may correspond with a multiplication factor of 32, and a multiplier value of "11" may correspond with a multiplication factor of 64. In the negative extension mode, the number of tokens in the bucket is negative and obtained by multiplying the bucket value with a multiplication factor determined by the multiplier value. In the positive mode, data packets can be sent assuming the bucket fill level exceeds the estimated data packet length. In the negative mode, no data packets can be sent. Obviously, variant implementations of the token bucket controller according to the current invention without sign bit and without negative extension mode can be thought of.

Still optionally, as defined by claim 3, N may be configured dependent on relative accuracy requirements for the data packet shaping or scheduling.

Indeed, the number of bits N that will be used to express the bucket value and the number of bits M-N that will be used to determine the multiplication factor in the extension modes preferably is determined in relation to the accuracy requirements of the data packet shaper or scheduler. Typically, these accuracy requirements are expressed in relative accuracy restrictions. If the scheduling accuracy for a DRR based scheduler is for instance set to 6 %, the range of a traditional 12 bit token bucket, i.e. 2¹²=4096, could be realized through a token bucket according to the current invention with 7 bit bucket value and 1 bit compression parameter corresponding to a multiplication factor of 32 when this bit is set, i.e. 2⁷x32=4096. A bucket fill level of 129 which can no longer be expressed by the 7 bit bucket value would be approximated in the extension mode by 5x32 = 160. This would introduce an error of 24 % on the exact bucket fill level not satisfying the 6 % requirement. An alternate 8-bit implementation satisfying the 6 % requirement is described further below.

According to yet another optional aspect defined by claim 4, the token bucket controller according to the current invention may further comprise dithering logic for statistically approximating the exact packet length when decrementing or incrementing the bucket value, the dithering logic comprising:
- the means for receiving the exact packet length of a sent data packet;
- the means for dividing the exact packet length with the multiplier value thereby generating the quotient and the rest packet length;
- a pseudo-random pattern generator for generating a pseudo-random value between one and the multiplier value;
- a comparator for comparing the rest packet length with the pseudo-random value; and
- the means for determining the bucket value decrement or increment further adapted to determine the bucket value decrement or increment depending on the comparison between the rest packet length with the pseudo-random value.

Dithering allows to further improve the accuracy of the token bucket implementation. Once the exact length of the sent data packet is known, the bucket decrement has to be determined. In case of extension of the bucket range through compression in accordance with the principles of the current invention, the bucket decrement shall have to approximate the exact packet length. Dithering enables to approximate the exact packet length statistically thereby increasing the accuracy. In an example situation where a stream of 64 data packets having a packet length of 65 bytes is sent using a token bucket implementation according to the current invention with multiplier value equal to 64, the overall bucket decrement is successfully approximated when a bucket decrement of 1x64 is applied 63 times and a bucket decrement of 2x64 is applied 1 time. Thus, by dividing the exact packet length 65 with the multiplier value 64, a rest packet length of 1 is obtained. This rest packet length must be compared with a pseudo-random value between 1 and 64, including 1 and 64. When the pseudo-random value is higher than the rest packet length, a bucket value decrement of 1 will be applied. When the pseudo-random value is smaller than or equal to the rest packet length, a bucket value decrement of 2 will be applied. In general, the dithering technique shall be applied on mixed-size data packet streams yielding byte-accurate shaping or scheduling over time. The dithering technique can also be applied to more accurately determine the credits that are added to the bucket value.

In addition to a token bucket controller as defined by claim 1, the current invention also relates to a corresponding method for controlling a token bucket for data packet shaping or scheduling as defined by claim 5, the token bucket having a bucket parameter of M bits, M being a first integer value, and the method comprising:
- using N bits out of the M bits for a bucket value, N being a second integer value smaller than M, and
- using M-N bits out of the M bits for a compression parameter extending the bucket range, each compression parameter value corresponding with a respective multiplier value for the bucket value to thereby extend the bucket value range to 2^{N} multiplied with the respective multiplier value, with respective absolute granularity equal to the respective multiplier value,
wherein M is further configured to fit the width of an embedded SRAM in an FPGA device wherein the bucket parameter is memorized,
- receiving the exact packet length of a sent data packet;
- dividing the exact packet length with the multiplier value thereby generating a quotient and a rest packet length; and
- determining a bucket value decrement or increment depending on the quotient and the rest packet length.

### Brief Description of the Drawings

Fig. 1 illustrates a prior art token bucket implementation;
Fig. 2 illustrates a first embodiment of the token bucket controller according to the current invention;
Fig. 3 illustrates the token bucket resulting from the embodiment illustrated by Fig. 2:
Fig. 4 illustrates the token bucket resulting from a second embodiment of the token bucket controller according to the present invention;
Fig. 5 illustrates the estimation-correction technique in a preferred embodiment of the present invention; and
Fig. 6 illustrates an implementation of the dithering logic in a preferred embodiment of the present invention.

### Detailed Description of Embodiment(s)

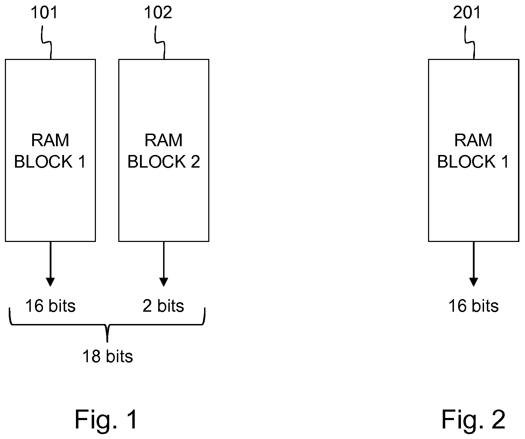

Fig. 1 shows a prior art token bucket implementation with 18 bit wide bucket value that is stored in two RAM blocks 101 and 102. Such RAM blocks have equal sizes in FPGA devices. In Fig. 1, it is assumed that FPGAs with 16 bit wide RAM blocks are available as a result of which the available memory resources are not optimally used.

The requirement for a shaper or scheduler is usually expressed in relative accuracy, for instance an accuracy of 1% may be required. This insight led to the token bucket implementation illustrated by Fig. 2 as an alternative for the implementation illustrated by Fig. 1. In Fig. 2, the bucket parameter size has been reduced from 18 bits down to 16 bits, thus reducing the width to a power of 2 to fit the bucket parameter width with a typical embedded RAM width available in FPGAs. Indeed, RAM widths in FPGAs are typically available in powers of 2. The bucket value in Fig. 2 has been further reduced to 14 bits. The two remaining bits define a compression parameter consisting of one range extension bit and one sign bit. As a result, the required accuracy is achieved with a bucket parameter of 16 bits that fits into a single RAM block 201. The RAM requirements for implementing the token bucket controller are thus reduced by a factor 2 in comparison with the prior art solution illustrated by Fig. 1.

It is noticed that the required accuracy alternatively could be achieved by using for instance 13 bits: a 10 bit regular bucket value, 2 extension bits respectively representing a multiplier value of 8 and a multiplier value of 64, and 1 sign bit for positive or negative range extension.

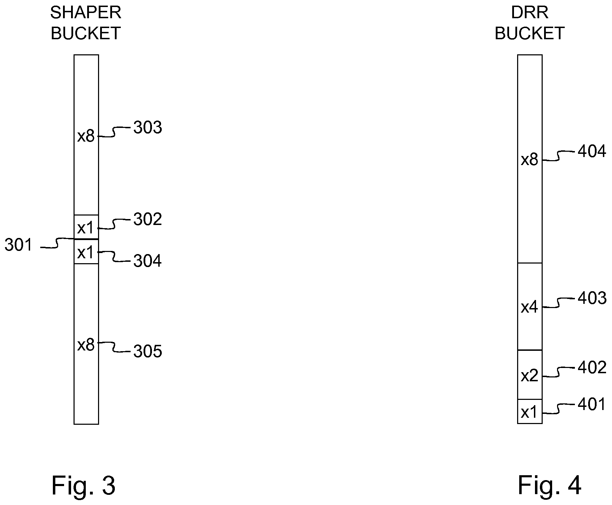

The resulting shaper bucket range is illustrated by Fig. 3. Therein, four modes exist. In the non-extended mode, the 14 bit bucket value is used and divided in a positive range 302 and a negative range 304. In case the sign bit is set 0, the queue is in its positive range 302, i.e. the range above the send threshold 301, with single byte granularity. The queue is able to send when the bucket parameter is in this range. When the sign bit is set 1, the queue is in its negative range 304, i.e. the range below the send threshold 301, with single byte granularity. In this situation, the queue is not able to send packets in the network. The non-extended positive and negative range 302 and 304 each are represented by a 14 bit bucket value, implying a bucket range of 2¹⁴ = 16384 credits at most. When the sign bit is set 0 and the extension bit is set 1, the queue is in the positive extension mode represented by range 303 in Fig. 3. The 14 bit bucket value is considered positive now and multiplied by 8. The bucket range is extended to 2¹⁴ x 8 = 131072 with a granularity of 8 bytes. Similarly, when the sign bit is set 1 and the extension bit is set 1, the queue is in the negative extension mode represented by range 305 in Fig. 3. The bucket range is also extended in the negative to 131072 with a granularity of 8 bytes.

The same compressing technique can be used for the bucket parameter of a Deficit Round Robin (DRR) scheduler where the accuracy is for instance set to 6 %. It is assumed that the bucket parameter width M is reduced from 12 bits down to 8 bits according to the present invention in order to fit an 8 bit wide embedded RAM. This DRR token bucket implementation is illustrated by Fig. 4.

The Deficit Round Robin (DRR) implementation illustrated by Fig. 4 ensures a fair bandwidth distribution between contending queues under congestion. The dynamic range of this DRR implementation is 1/128. The DRR implementation has been set-up with a token bucket credit RAM that holds an 8 bit wide bucket parameter. Again, range compression has been applied: 6 bits represent the DRR bucket value whereas 2 bits represent the compression parameter. A compression parameter of "00" corresponds with a multiplier value of 1, a compression parameter of "01" corresponds with a multiplier value of 2, a compression parameter of "10" corresponds with a multiplier value of 8, and a compression parameter of "11" corresponds with a multiplier value of 32. As a consequence, the DRR bucket is able to range in zone 401 from 0 to 64 SDRAM bursts or from 0 to 4 kByte with a granularity of 1 SDRAM burst or 64 Bytes, i.e. 1 SDRAM burst, in zone 402 up to 128 SDRAM bursts or from 4 kByte to 8 kByte with a granularity of 2 SDRAM bursts or 128 Bytes, in zone 403 up to 512 SDRAM bursts or from 8 kByte to 32 kByte with a granularity of 8 SDRAM bursts or 512 Bytes, and in zone 404 up to 2048 SDRAM bursts or from 32 kByte to 128 kByte with a granularity of 32 SDRAM bursts or 2 kByte.

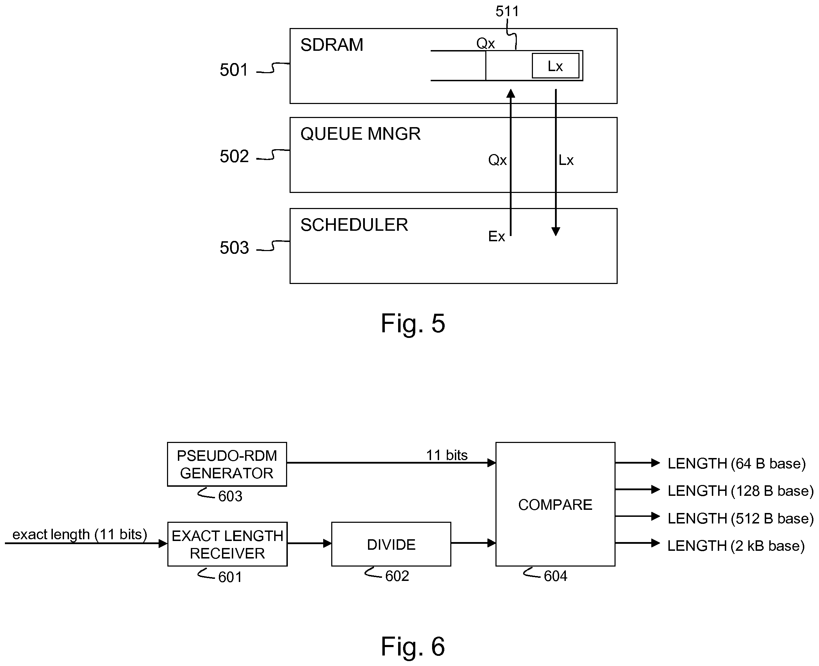

To improve the accuracy of the token bucket implementation according to the present invention, a dithering technique is used that will be explained below with reference to Fig. 5 and Fig. 6.

The packet shaper or DRR based scheduler 533 heavily relies on the length of the packet it schedules out to calculate the shaper bandwidth. The lengths of all packets however are typically stored in an SDRAM device 501 external to the shaper or scheduler 503. As a result, the round-trip delay of fetching the exact length Lx of a scheduled packet is a lot larger than the required inter-packet send time of the scheduler 503. Typically, the packet rate of a scheduler 503 is in the multi-million packets per second, resulting in sub-microsecond inter-packet scheduler times, whereas the round trip delay for fetching the exact length Lx of a scheduled packet from an external SDRAM 501 is in the order of a few microseconds. Using an estimation-correction scheme solves the problem of excessive burst behavior. Such estimation-correction scheme uses an estimated value Ex for the packet length to do the initial scheduling. Not using such an estimated value Ex would result in back-to-back scheduling of the same queue Qx or 511 until the exact length Lx is received.

An improvement on the classical fixed value estimated value Ex is to use a global or per-queue running average value as estimated value. This will result in better estimation of the sent burst volume.

Fig. 5 shows a DRR based scheduler 503 providing the scheduled queue number Qx to the queue manager 502. The scheduler 503 will then already use the estimated packet length Ex to update its shaper bucket. The queue manager 502 will fetch the requested packet and its exact length Lx from the external SDRAM 501 and deliver this back to the scheduler 503. The scheduler 503 will then use the exact length Lx to execute a correction on the bucket value: new bucket value = old bucket value + (Lx - Ex).

In combination with the token bucket compression technique according to the present invention, the estimation-correction scheme illustrated by Fig. 5 preferably is supplemented with a dithering technique that allows maintaining byte accuracy.

An embodiment of this dithering technique is illustrated by Fig. 6. Therein, A pseudo-random pattern generator 603 is used to statistically approximate the exact length of the packets that are sent. As an example, a benchmark-like stream of 65 byte long packets is successfully approximated by taking into account 63 times 64 bytes and one time 128 bytes. Thus, the bucket value must be decremented 63 times by one, and must be decremented 1 time by two in order to maintain byte accuracy for a stream of 65 byte long packets using a multiplier value equal to 64. By dividing the exact packet length 65 with the multiplier value 64, a rest packet length of 1 is obtained. This rest packet length must be compared with a pseudo-random value between 1 and 64, including 1 and 64. When the pseudo-random value is higher than the rest packet length, a bucket value decrement of 1 will be applied. When the pseudo-random value is smaller than or equal to the rest packet length, a bucket value decrement of 2 will be applied. In general, the dithering technique obviously shall be applied on mixed-size data packet streams yielding byte-accurate shaping or scheduling over time.

Fig. 6 shows an implementation of the dither length approximation circuit, yielding the dither-rest values for each of the possible granularity ranges. The dithering logic for statistically approximating the exact packet length when decrementing or incrementing the bucket value comprises an interface 601 for receiving and interpreting the exact packet length from an external RAM device like 501 in Fig. 5. Coupled thereto is division logic 602 for dividing the exact packet length with the multiplier value of the applicable granularity range (or bucket extension mode). The division logic 602 generates a rest packet length that will be compared by comparator 604 with a pseudo-random value generated by the pseudo-random pattern generator 603. The generated pseudo-random value shall be between one and the applicable multiplier value, including one and the multiplier value. Depending on whether the rest packet length is above or below the generated pseudo-random value, the bucket decrement or increment shall be increased by 1.

It is noticed that also the bucket line-up step is done using this dithering technique. It is also noticed that the bucket update code shall also contain compression level boundary crossing.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A token bucket controller for data packet shaping or scheduling, to control the rate of data packets that are injected into a telecommunication network, said token bucket controller having a bucket parameter of M bits, M being a first integer value, **CHARACTERIZED IN THAT** said bucket parameter comprises:
- a bucket value of N bits out of said M bits, N being a second integer value smaller than M, and
- a compression parameter of M-N bits out of said M bits, each compression parameter value corresponding with a respective multiplier value for said bucket value to thereby extend said bucket value range to 2^{N} multiplied with said respective multiplier value, with respective absolute granularity equal to said respective multiplier value (401, 402, 403, 404),
wherein M is further configured to fit the width of an embedded Static Random Access Memory, SRAM, (201) in an Field Programmable Gate Array, FPGA, device wherein said bucket parameter is memorized,
said token bucket controller further comprising:
- means (601) for receiving the exact packet length of a sent data packet;
- means (602) for dividing said exact packet length with said multiplier value thereby generating a quotient and a rest packet length; and
- means for determining a bucket value decrement or increment depending on said quotient and said rest packet length.

2. A token bucket controller according to claim 1,
wherein said compression parameter comprises a sign value of 1 bit and a multiplier value of M-N-1 bits.

3. A token bucket controller according to claim 1,
wherein N is configured dependent on relative accuracy requirements for said data packet shaping or scheduling.

4. A token bucket controller according to claim 2,
further comprising dithering logic for statistically approximating the exact packet length when decrementing or incrementing said bucket value, said dithering logic comprising:
- said means (601) for receiving the exact packet length of a sent data packet;
- said means (602) for dividing said exact packet length with said multiplier value thereby generating said quotient and said rest packet length;
- a pseudo-random pattern generator (603) for generating a pseudo-random value between one and said multiplier value;
- a comparator (604) for comparing said rest packet length with said pseudo-random value; and
- said means for determining said bucket value decrement or increment further adapted to determine said bucket value decrement or increment depending on the comparison between said rest packet length with said pseudo-random value.

5. A method for controlling a token bucket for data packet shaping or scheduling to control the rate of data packets that are injected into a telecommunication network said token bucket having a bucket parameter of M bits, M being a first integer value,
**CHARACTERIZED IN THAT** said method comprises:
- using N bits out of said M bits for a bucket value, N being a second integer value smaller than M, and
- using M-N bits out of said M bits for a compression parameter extending the bucket range, each compression parameter value corresponding with a respective multiplier value for said bucket value to thereby extend said bucket value range to 2^{N} multiplied with said respective multiplier value, with respective absolute granularity equal to said respective multiplier value,
wherein M is further configured to fit the width of an embedded Static Random Access Memory, SRAM, in an Field Programmable Gate Array, FPGA, device wherein said bucket parameter is memorized,
- receiving the exact packet length of a sent data packet;
- dividing said exact packet length with said multiplier value thereby generating a quotient and a rest packet length; and
- determining a bucket value decrement or increment depending on said quotient and said rest packet length.

## Patentansprüche

1. Token-Bucket-Controller zur Datenpaketformung oder -planung, um die Rate der Datenpakete zu steuern, die in ein Telekommunikationsnetzwerk eingebracht werden, wobei der besagte Token-Bucket-Controller einen Bucket-Parameter von M Bits aufweist, wobei M ein erster ganzzahliger Wert ist,
**DADURCH GEKENNZEICHNET, DASS** der besagte Bucket-Parameter Folgendes umfasst:
- einen Bucket-Wert von N Bits aus den besagten M Bits, wobei N ein zweiter ganzzahliger Wert ist, der kleiner ist als M, und
- einen Komprimierungsparameter von M-N Bits aus den besagten M Bits, wobei jeder Komprimierungsparameterwert einem jeweiligen Multiplikatorwert für den besagten Bucket-Wert entspricht, um dadurch den besagten Bucket-Wert-Bereich auf 2^{N} multipliziert mit dem besagten jeweiligen Multiplikatorwert zu erweitern, wobei die jeweilige absolute Granularität gleich ist wie der besagte jeweilige Multiplikatorwert (401, 402, 403, 404),
wobei M weiterhin konfiguriert ist, um zu der Breite eines eingebetteten statischen Direktzugriffsspeichers, SRAM, (201) in einer feldprogrammierbaren Gate-Array-Vorrichtung, FPGA, zu passen, worin der besagte Bucket-Parameter gespeichert ist, wobei der besagte Token-Bucket-Controller weiterhin Folgendes umfasst:
- Mittel (601) zum Empfangen der exakten Paketlänge eines gesendeten Datenpakets;
- Mittel (602) zum Dividieren der besagten exakten Paketlänge durch den besagten Multiplikatorwert, wobei ein Quotient und eine Restpaketlänge erzeugt werden; und
- Mittel zum Bestimmen eines Bucket-Wert-Dekrements oder -Inkrements in Abhängigkeit von dem besagten Quotienten und der besagten Restpaketlänge.

2. Token-Bucket-Controller nach Anspruch 1, wobei der besagte Komprimierungsparameter einen Zeichenwert von 1 Bit und einen Multiplikatorwert von M-N-1 Bits umfasst.

3. Token-Bucket-Controller nach Anspruch 1, wobei N in Abhängigkeit von relativen Genauigkeitsanforderungen für die besagte Datenpaketformung oder -planung konfiguriert ist.

4. Token-Bucket-Controller nach Anspruch 2, weiterhin umfassend eine Dithering-Logik zur statistischen Näherung der exakten Paketlänge, wenn der besagte Bucket-Wert erhöht oder verringert wird, wobei die besagte Dithering-Logik Folgendes umfasst:
- die besagten Mittel (601) zum Empfangen der exakten Paketlänge eines gesendeten Datenpakets;
- die besagten Mittel (602) zum Dividieren der besagten exakten Paketlänge durch den besagten Multiplikatorwert, wobei der besagte Quotient und die besagte Restpaketlänge erzeugt werden;
- einen Pseudozufallsmustergenerator (603) zum Erzeugen eines Pseudozufallswerts zwischen eins und dem besagten Multiplikatorwert;
- einen Komparator (604) zum Vergleichen der besagten Restpaketlänge mit dem besagten Pseudozufallswert; und
- die besagten Mittel zum Bestimmen des besagten Bucket-Wert-Dekrements oder -Inkrements, die weiterhin angepasst sind zum Bestimmen des besagten Bucket-Wert-Dekrements oder -Inkrements in Abhängigkeit von dem Vergleich zwischen der besagten Restpaketlänge und dem besagten Pseudozufallswert.

5. Verfahren zum Steuern eines Token-Buckets zur Datenpaketformung oder - planung, um die Rate der Datenpakete zu steuern, die in ein Telekommunikationsnetzwerk eingebracht werden, wobei der besagte Token-Bucket einen Bucket-Parameter von M Bits aufweist, wobei M ein erster ganzzahliger Wert ist,
**DADURCH GEKENNZEICHNET, DASS** das besagte Verfahren Folgendes umfasst:
- Verwenden von N Bits aus den besagten M Bits für einen Bucket-Wert, wobei N ein zweiter ganzzahliger Wert ist, der kleiner ist als M, und
- Verwenden von M-N Bits aus den besagten M Bits für einen Komprimierungsparameter, der den Bucket-Bereich erweitert, wobei jeder Komprimierungsparameterwert einem jeweiligen Multiplikatorwert für den besagten Bucket-Wert entspricht, um dadurch den besagten Bucket-Wert-Bereich auf 2^{N} multipliziert mit dem besagten jeweiligen Multiplikatorwert zu erweitern, wobei die jeweilige absolute Granularität gleich ist wie der besagte jeweilige Multiplikatorwert,
wobei M weiterhin konfiguriert ist, um zu der Breite eines eingebetteten statischen Direktzugriffsspeichers, SRAM, in einer feldprogrammierbaren Gate-Array-Vorrichtung, FPGA, zu passen, worin der besagte Bucket-Parameter gespeichert ist,
- Empfangen der exakten Paketlänge eines gesendeten Datenpakets;
- Dividieren der besagten exakten Paketlänge durch den besagten Multiplikatorwert, wobei ein Quotient und eine Restpaketlänge erzeugt werden; und
- Bestimmen eines Bucket-Wert-Dekrements oder -Inkrements in Abhängigkeit von dem besagten Quotienten und der besagten Restpaketlänge.

## Revendications

1. Contrôleur de seau de jetons pour la mise en forme ou l'ordonnancement de paquets de données, pour contrôler le débit de paquets de données qui sont injectés dans un réseau de télécommunication, ledit contrôleur de seau de jetons ayant un paramètre de seau de M bits, M étant une première valeur entière,
**CARACTÉRISÉ EN CE QUE**
ledit paramètre de seau comprend :
- une valeur de seau de N bits parmi lesdits M bits, N étant une deuxième valeur entière inférieure à M, et
- un paramètre de compression de M-N bits parmi lesdits M bits, chaque valeur de paramètre de compression correspondant à une valeur de multiplicateur respective pour ladite valeur de seau afin d'étendre ladite plage de valeurs de seau à 2^{N} multiplié par ladite valeur de multiplicateur respective, avec une granularité absolue respective égale à ladite valeur de multiplicateur respective (401, 402, 403, 404),
dans lequel M est en outre configuré pour adapter la largeur d'une mémoire vive statique, SRAM, (201) intégrée dans un dispositif de réseau prédiffusé programmable par l'utilisateur, FPGA, dans lequel ledit paramètre de seau est mémorisé, ledit contrôleur de seau de jetons comprenant en outre :
- des moyens (601) pour recevoir la longueur de paquet exacte d'un paquet de données envoyé ;
- des moyens (602) pour diviser ladite longueur de paquet exacte par ladite valeur de multiplicateur, générant ainsi un quotient et une longueur de paquet restante ; et
- des moyens pour déterminer un décrément ou un incrément de valeur de seau en fonction dudit quotient et de ladite longueur de paquet restante.

2. Contrôleur de seau de jetons selon la revendication 1,
dans lequel ledit paramètre de compression comprend une valeur de signe de 1 bit et une valeur de multiplicateur de M-N-1 bits.

3. Contrôleur de seau de jetons selon la revendication 1,
dans lequel N est configuré en fonction d'exigences de précision relative pour ladite mise en forme ou ledit ordonnancement de paquets de données.

4. Contrôleur de seau de jetons selon la revendication 2,
comprenant en outre une logique de superposition pour se rapprocher statistiquement de la longueur de paquet exacte lorsque l'on décrémente ou que l'on incrémente ladite valeur de seau, ladite logique de superposition comprenant :
- lesdits moyens (601) pour recevoir la longueur de paquet exacte d'un paquet de données envoyé ;
- lesdits moyens (602) pour diviser ladite longueur de paquet exacte par ladite valeur de multiplicateur, générant ainsi ledit quotient et ladite longueur de paquet restante ;
- un générateur de modèles pseudo aléatoires (603) pour générer une valeur pseudo aléatoire entre un et ladite valeur de multiplicateur ;
- un comparateur (604) pour comparer ladite longueur de paquet restante à ladite valeur pseudo aléatoire ; et
- lesdits moyens pour déterminer ledit décrément ou ledit incrément de valeur de seau étant en outre adaptés pour déterminer ledit décrément ou ledit incrément de valeur de seau en fonction de la comparaison entre ladite longueur de paquet restante et ladite valeur pseudo aléatoire.

5. Procédé de contrôle d'un seau de jetons pour la mise en forme ou l'ordonnancement de paquets de données pour contrôler le débit de paquets de données qui sont injectés dans un réseau de télécommunication, ledit seau de jetons ayant un paramètre de seau de M bits, M étant une première valeur entière,
**CARACTÉRISÉ EN CE QUE** ledit procédé comprend les étapes suivantes :
- utiliser N bits parmi lesdits M bits pour une valeur de seau, N étant une deuxième valeur entière inférieure à M, et
- utiliser M-N bits parmi lesdits M bits pour un paramètre de compression qui étend la plage de seaux, chaque valeur de paramètre de compression correspondant à une valeur de multiplicateur respective pour ladite valeur de seau afin d'étendre ladite plage de valeurs de seau à 2^{N} multiplié par ladite valeur de multiplicateur respective, avec une granularité absolue respective égale à ladite valeur de multiplicateur respective,
dans lequel M est en outre configuré pour adapter la largeur d'une mémoire vive statique, SRAM, intégrée dans un dispositif de réseau prédiffusé programmable par l'utilisateur, FPGA, dans lequel ledit paramètre de seau est mémorisé,
- recevoir la longueur de paquet exacte d'un paquet de données envoyé ;
- diviser ladite longueur de paquet exacte par ladite valeur de multiplicateur, générant ainsi un quotient et une longueur de paquet restante ; et
- déterminer un décrément ou un incrément de valeur de seau en fonction dudit quotient et de ladite longueur de paquet restante.
